# EUROPÄISCHE PATENTSCHRIFT

(11) **EP 1 878 824 B1**
(45) Veröffentlichungstag und Bekanntmachung des Hinweises auf die Patenterteilung: **25.04.2012**
(21) Anmeldenummer: 07013574.4
(22) Anmeldetag: 11.07.2007
(51) Int. Cl.: D06F 37/30, H02K 11/04

(54) **Antriebsvorrichtung für eine Waschmaschine**
Drive device for a washing machine
Dispositif d'entraînement pour un lave-linge

(30) Priorität: 13.07.2006 DE 102006032356
(43) Veröffentlichungstag der Anmeldung: 16.01.2008
(73) Patentinhaber: Diehl AKO Stiftung & Co. KG, 88239 Wangen im Allgäu (DE)
(72) Erfinder: Weinmann, Martin, 88339 Bad Waldsee (DE); Müller, lexander, 88339 Bad Waldsee - Reute (DE); Mehrer, Thomas, 88239 Wangen i.A. (DE)
(74) Vertreter: Diehl Patentabteilung

(56) Entgegenhaltungen:
- EP-A2- 1 138 242
- DE-A1- 3 602 606
- DE-A1- 19 636 723

## Beschreibung

Die vorliegende Erfindung betrifft eine Antriebsvorrichtung für eine Waschmaschine nach dem Oberbegriff des Anspruchs 1.

Zum Betrieb einer Waschmaschine wird allgemein ein Antriebsmotor für die Waschmaschinentrommel mit einer elektronischen Regelung benö tigt. Bei auf dem Markt erhältlichen Waschmaschinen ist die elektronische Regelung überwiegend getrennt vom Motor angeordnet. Auf diese Weise wird eine Übertragung der Motorwärme und der elektrischen und magnetischen Stö rfelder auf die Elektronik vermieden. Es sind aber auch einige Ansätze bekannt, die Motorelektronik und den Elektromotor in einer kompakten Einheit zusammenzufügen.

Die DE 36 02 606 A1 beschreibt einen Waschmaschinenantrieb mit einem über einen Umrichter gespeisten Drehstrommotor, bei dem die Umrichterelektronik in einem Anschlusskasten angeordnet ist, der als von dem Motorgehäuse separates Bauteil in räumlicher Nähe, aber wärmeisoliert vom Motor befestigt und an seiner Außenseite mit Kühlrippen versehen ist. Eine wirklich kompakte Einheit aus Motor und Elektronik wird hier noch nicht vorgeschlagen.

In der DE 90 17 681 U1 ist ein Waschmaschinenantrieb mit einem über einen Umrichter gespeisten Drehstrommotor beschrieben, bei dem die Umrichterelektronik mit dem Drehstrommotor in einem gemeinsamen Gehäuse angeordnet sind, die vom Motor angetriebene Antriebswelle nach hinten durch die Elektronik ragt und auf der dem Motor abgewandten Seite der Elektronik ein Lüfterrad an der Antriebswelle montiert ist. Der vom Lüfterrad erzeugte Kühlluftstrom strö mt zunächst an der gekapselten Elektronik vorbei, die außen mit Kühlrippen versehen ist, und kühlt anschließend den Motor. Die Elektronikbauteile werden somit nur indirekt über die Kühlrippen am Umrichtergehäuse gekühlt.

Aus der DE 199 49 914 B4 ist eine Elektromotoranordnung mit einem integrierten elektronischen Steuergerät bekannt, bei der das elektronische Steuergerät mehrere Module enthält, die auf einem die Antriebswelle radial umgebenden Träger montiert sind. Die Trägerplatte der Steuermodule wird dabei von einem Luftstrom gekühlt.

Die US-Patente Nr. 6,394,767 und Nr. 6,713 907 offenbaren jeweils einen Motor mit integrierter Elektronik, die zwar im Luftstrom zur Kühlung des Motors angeordnet ist, aber - für die Wärmeabfuhr nachteilig - vö llig vergossen ist bzw. in einem Topf gekapselt vom Motor getrennt ist.

In der DE 101 61 367 A1 ist eine elektrische Antriebseinheit mit einem Motor und einem Steuermodul gezeigt, bei der eine Nabe eines auf der Drehachse des Elektromotors aufgesetzten Lüfterflügelrades doppelwandig ausgebildet ist und der so gebildete höhle Nabeninnenraum zum Kühlen der Elektronik benutzt wird.

Die DE 197 03 655 C2 beschreibt einen elektrischen Antrieb mit einem Elektromotor und einer vorgeschalteten Leistungselektronik, bei dem der Elektromotor und die Elektronik in einem gemeinsamen Gehäuse angeordnet sind und die Elektronik auf Trägern in einem Kühlluftkanal um den Motor herum angeordnet sind.

Die oben genannten Antriebsvorrichtungen zeigen die Probleme bei der Integration von Motor und Elektronik. Die Elektronik muss vor elektrischen und magnetischen Stö rfeldern geschützt werden, sie darf nicht durch die Motorwärme zu stark erhitzt werden, und durch den Kühlluftstrom gefö rderte Staub- und Abriebteilchen dürfen die Leiterbahnen der Elektronik nicht verschmutzen. Aufgrund dieser Anforderungen ergeben sich unterschiedliche, mehr oder weniger aufwändige Lö sungsansätze für die Integration von Motor und Steuerelektronik.

Ferner ist aus der EP 1 138 242 A2 eine Antriebsvorrichtung für ein Gebläse eines Staubsaugers bekannt. Bei dieser Antriebsvorrichtung ist das Gebläse vom Elektromotor durch eine Zwischenwand getrennt und es sind Ausführungsbeispiele, bei welchen die Elektronik zum Steuern des Betriebs der Antriebsvorrichtung Leiterplatten zu beiden Seiten der Zwischenwand aufweist, und Ausführungsbeispiele, bei welchen beide Leiterplatten auf der dem Elektromotor zugewandten Seite dieser Zwischenwand angeordnet sind und elektronische Bauteile der einen Leiterplatte durch Durchbrechungen in der Zwischenwand in Richtung zum Gebläse ragen. Für die Kühlung des Elektromotors ist in diesem Fall kein spezieller Lüfter vorgesehen, da hierzu die vom Gebläse erzeugten Luftströme genutzt werden.

Die DE 36 02 606 A1 offenbart einen Waschautomatenantrieb mit einem Elektromotor, einer Antriebswelle und einem separaten Anschlusskasten mit Umrichter. Der Anschlusskasten ist dabei wärmeisoliert und über Abstandshalter am Motorgehäuse befestigt, sodass der Umrichter von der Motorwärme nur wenig beeinflusst, aber dennoch in räumlicher Nähe zum Motor untergebracht ist.

In der DE 196 723 A1 ist ein Wechselstromelektromotor beschrieben, bei welchem das Motorgehäuse, das Lüftergehäuse und das Steuergehäuse eine Baueinheit bilden. Die Leistungshalbleiter der Steuereinheit sind dabei in der Nähe der geschlossenen Bodenwand des Steuergehäuses angeordnet, welche dem durch den Lüfter erzeugten Luftstrom ausgesetzt ist.

Der Erfindung liegt die Aufgabe zugrunde, eine Antriebsvorrichtung für eine Waschmaschine bereitzustellen, bei der Elektromotor und Elektronik in einer kompakten Einheit angeordnet sind und gleichzeitig eine ausreichende Kühlung der elektronischen Leistungsbauteile und ein Schutz der Elektronik gegen Staub im Kühlluftstrom und elektrische und magnetische Störfelder des Elektromotors gewährleistet sind.

Diese Aufgabe wird gelöst durch eine Antriebsvorrichtung für eine Waschmaschine mit den Merkmalen des Anspruchs 1. Vorteilhafte Ausgestaltungen und Weiterbildungen der Erfindung sind Gegenstand der abhängigen Ansprüche.

Gemäß der vorliegenden Erfindung weist die Antriebsvorrichtung für eine Waschmaschine einen Elektromotor; eine Antriebswelle, die zum Drehantrieb mit dem Elektromotor verbunden ist und die vom Elektromotor erzeugte Drehkraft auf eine Trommel der Waschmaschine überträgt; einen Lüfter zum Kühlen des Elektromotors und eine Elektronik zum Steuern des Betriebs des Elektromotors auf. Der Elektromotor und die Elektronik sind in einer gemeinsamen Einheit wie beispielsweise einem gemeinsamen Motorgehäuse integriert. Weiter weist die gemeinsame Einheit eine Zwischenwand wie beispielsweise ein Lagerschild des Motors auf, wobei der Elektromotor und der Lüfter auf der einen Seite der Zwischenwand und eine Leiterplatte der Elektronik auf der anderen Seite der Zwischenwand angeordnet sind; die Zwischenwand weist wenigstens eine Durchbrechung auf; und die Elektronik umfasst Leistungsbauteile, die wenigstens teilweise durch die wenigstens eine Durchbrechung ragen und mit der Zwischenwand und/oder mit einem vom Lüfter erzeugten Kühlluftstrom in Kontakt stehen.

Durch die Integration von Elektromotor und Elektronik in eine gemeinsame Einheit wird eine kompakte Bauweise erzielt. Indem der Elektromotor auf der einen Seite einer Zwischenwand der Einheit und eine Leiterplatte der Elektronik auf der anderen Seite der Zwischenwand angeordnet sind, ist die Elektronik einerseits gegen Staub und Feuchtigkeit und andererseits gegen elektrische und magnetische Stö rfelder, die vom Elektromotor erzeugt werden, geschützt. Die Leistungsbauteile der Elektronik, die eine stärkere Kühlung benö tigen, aber andererseits besser selbst gegen Staub und Feuchtigkeit gekapselt werden kö nnen, ragen durch die wenigstens eine Durchbrechung in der Zwischenwand und kö nnen somit indirekt durch die vom Kühlluftstrom gekühlte Zwischenwand und/oder direkt durch den vom Lüfter erzeugten Kühlluftstrom ausreichend gekühlt werden.

Der Elektromotor selbst erfordert bei dieser Konstruktion allenfalls geringfügige Änderungen, und der zusätzliche Platzbedarf für die Elektronik in der gemeinsamen Einheit ist minimiert. Die Antriebsvorrichtung ist speziell für eine Waschmaschine entwickelt worden, weshalb auch der für den Waschmaschinenbetrieb typische Programmablauf berücksichtigt worden ist. Der Waschmaschinenantrieb muss während eines Waschgangs nur eine geringe Leistung abgeben; eine besondere Kühlung der Elektronik und auch des Motors ist nicht erforderlich, weshalb die geringe Drehzahl des Lüfters in diesem Betriebsbereich ausreicht. Während eines kurzen Schleudergangs ist die vom Elektromotor abgegebene Leistung um ein Vielfaches hö her als im Waschbetrieb; gleichzeitig wird aber auch der Lüfter mit einer entsprechend erhö hten Drehzahl angetrieben, sodass die stärkere Kühlung für den Elektromotor erzielt wird und insbesondere die bestimmten Leistungsbauteile der Elektronik stärker gekühlt werden, welche beim Schleudervorgang besonders thermisch belastet werden. Aufgrund der speziellen Kühlung dieser Leistungsbauteile kö nnen diese auch kleiner und preiswerter ausgebildet werden.

In einer bevorzugten Ausgestaltung der Erfindung sind die Leiterbahnen der Leiterplatte auf der der Zwischenwand abgewandten Seite der Leiterplatte angeordnet. Auf diese Weise sind die Leiterbahnen auf der dem Kühlluftstrom des Kühlers abgewandten Seite und sind so besser gegen Verschmutzungen geschützt.

Die durch die Zwischenwand ragenden Leistungsbauteile sind bei einem zwischenkreisgespeisten Antrieb mit Asynchron- oder Synchronmotor zum Beispiel Zwischenkreiskondensatoren, die Oberwellen- und Funkentstö rdrossel, Netzgleichrichter und Einschaltstrombegrenzer, wie NTC oder Festwiderstand.

Zum besseren Schutz gegen Verschmutzungen kann die Elektronik ganz oder teilweise lackiert, vergossen und/oder mit Kunststoffabdeckungen versehen sein.

In einer Ausgestaltung der Erfindung ist die Zwischenwand bzw. das Lagerschild im Wesentlichen rechteckig ausgebildet.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: eine schematische Schnittansicht einer Antriebsvorrichtung für eine Waschmaschine gemäß einem bevorzugten Ausführungsbeispiel; und
- Fig. 2: eine vergrö ßerte Darstellung des Ausschnitts X in Fig. 1.

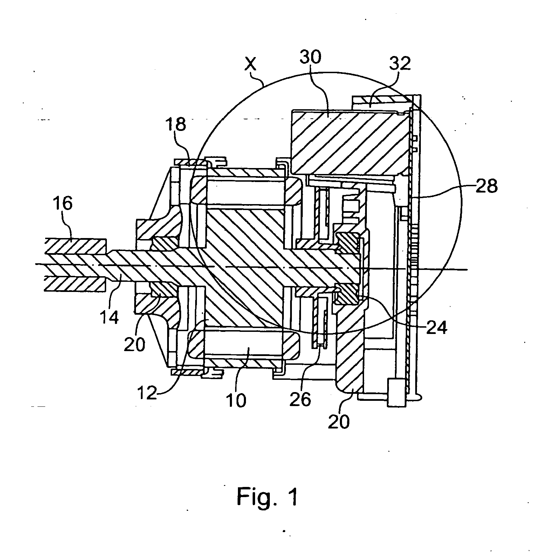

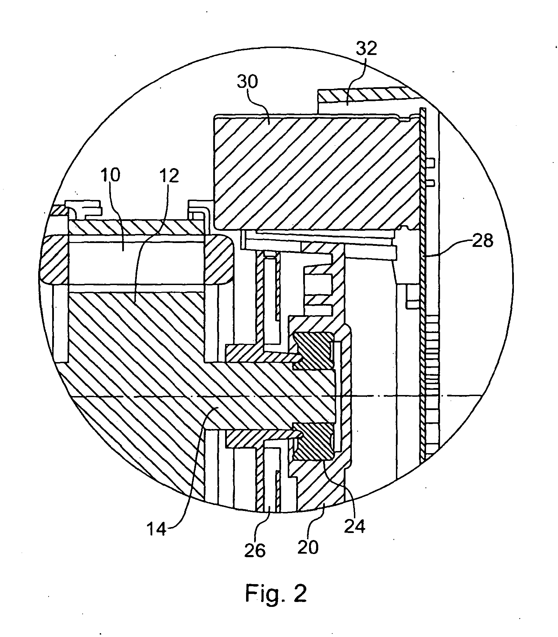

Es wird nun unter Bezug auf Fig. 1 und 2 der Aufbau und die Funktionsweise einer Antriebsvorrichtung für eine Waschmaschine gemäß einem bevorzugten Ausführungsbeispiel näher erläutert.

Die Antriebsvorrichtung enthält einen Elektromotor, der insbesondere Statorpakete 10 und einen Rotor 12 enthält. Der Rotor 12 ist mit einer Antriebswelle 14 verbunden, welche die vom Elektromotor 10, 12 erzeugte Drehkraft zum Beispiel über ein Riemenrad 16 auf die Trommel der Waschmaschine überträgt. Die Antriebswelle 14 ist mit dem Rotor 12 des Elektromotors in diesem Ausführungsbeispiel einteilig ausgebildet.

Da der Elektromotor 10, 12 im Vergleich zu herkö mmlichen Antriebsvorrichtungen für Waschmaschinen nicht oder allenfalls geringfügig modifiziert werden muss, wird auf eine detailliertere Beschreibung davon verzichtet. Bei dem Elektromotor 10, 12 kann es sich insbesondere sowohl um einen Asynchronmotor als auch um einen Synchronmotor mit einer oder mit mehreren Phasen handeln.

Die Antriebswelle 14 (bzw. der Rotor 12 des Elektromotors) ist an einem vorderen A-Lagerschild 18 und einem hinteren B-Lagerschild 20 über entsprechende Lager 22, 24 drehbar gehalten. Über die Lagerschilde 18, 20 ist die Antriebsvorrichtung in einer Waschmaschine zum Beispiel über Schraubverbindungen montierbar. Die Antriebswelle 14 ist an ihrem distalen Ende ferner mit einem Riemenrad 16 oder dergleichen versehen bzw. ausgebildet, über das die Antriebskraft vom Elektromotor 10, 12 bzw. der Antriebswelle 14 auf eine Waschmaschinentrommel (nicht dargestellt) übertragen werden kann. Alternativ ist es aber auch denkbar, dass die Antriebswelle 14 direkt mit der Waschmaschinentrommel gekoppelt ist.

Zwischen den beiden Lagerschilden 18, 20 ist ein Lüfter 26 zum Erzeugen eines Kühlluftstroms zur Kühlung des Elektromotors, insbesondere der elektronischen Bauteile vorgesehen. Der Lüfter 26 ist zum Beispiel aus einem Lüfterrad aufgebaut, das auf der Antriebswelle 14 montiert ist und zusammen mit ihr gedreht wird. Das Lüfterrad wird somit automatisch mit der gleichen Drehzahl wie die Antriebswelle 14 gedreht, sodass bei einer hö heren Drehzahl bzw. Leistung des Elektromotors 10, 12 vom Lüfter 26 automatisch ein stärkerer Kühlluftstrom erzeugt und der Elektromotor 10, 12 und die Leistungsbauteile 30 ausreichend gekühlt werden. Der Lüfter 26 kann dabei relativ klein ausgebildet sein, da er nur während eines kurzen Schleudergangs der Waschmaschine eine wirksame Kühlung bewirken muss und er gerade während eines solchen Schleudergangs aber eine hohe Drehzahl aufweist. Die Erfindung ist aber selbstverständlich nicht nur auf diese Ausführung und Anordnung des Lüfters 26 beschränkt; zum Beispiel kann der Lüfter auch separat von der Antriebswelle 14 in dem Gehäuse der Antriebsvorrichtung vorgesehen sein.

Die Waschmaschinen-Antriebsvorrichtung weist ferner eine Elektronik zur Steuerung des Elektromotors 10, 12, insbesondere zu seiner Spannungsversorgung und Drehzahlregelung auf. Diese Elektronik umfasst insbesondere eine Leiterplatte 28, auf der unter anderem auch einige Leistungsbauteile 30 montiert sind. Bei einem zwischenkreisgespeisten Antrieb mit Asynchron- oder Synchronmotor sind diese Leistungsbauteile 30 zum Beispiel Zwischenkreiskondensatoren, die Oberwellen- und Funkentstö rdrosseln, Netzgleichrichter und Einschaltstrombegrenzer wie NTC oder Festwiderstand.

Die äußere Gestalt des Motors unterscheidet sich kaum von jener eines herkö mmlichen Waschmaschinenantriebs, lediglich das hintere Lagerschild 20 ist etwas modifiziert. Insbesondere weist das hintere Lagerschild 20 wenigstens eine Durchbrechung 32 auf, deren Zweck später erläutert wird.

Das hintere Lagerschild 20 bildet eine Zwischenwand der gemeinsamen Einheit der Erfindung, auf deren einen Seite der Elektromotor 10, 12 angeordnet ist. Hinter dieser Zwischenwand 20, d.h. auf ihrer dem Elektromotor 10, 12 abgewandten Seite, ist die Elektronik zur Steuerung und Spannungsversorgung des Elektromotor 10, 12 (Drehzahlregelung, Einphasen- oder Mehrphasenspannungen variabler Frequenz und Amplitude) angeordnet. Diese Elektronik umfasst insbesondere eine Leiterplatte 28 und verschiedene Leistungsbauteile 30, wie beispielsweise Zwischenkreiskondensatoren, eine Oberwellen- und Funkentstö rdrossel, Netzgleichrichter, und Einschaltstrombegrenzer wie NTC oder Festwiderstand. Die empfindlichen Bereiche der Elektronik sind durch das Lagerschild 20 gegen elektrische und magnetische Stö rfelder des Elektromotors 10, 12 abgeschirmt.

Die Leiterplatte 28 ist so hinter dem Lagerschild 20 angeordnet, dass die Leiterbahnen, elektrischen Kontakte, elektrischen Komponenten und dergleichen auf ihrer der Zwischenwand 20 abgewandten Seite angeordnet sind. Damit sind diese Elemente auch auf der dem vom Lüfter 26 erzeugten Kühlluftstrom abgewandten Seite vorgesehen und so besser gegen Verschmutzungen geschützt.

Die oben genannten Leistungsbauteile 30, die üblicherweise nicht durch Verschmutzungen gefährdet sind bzw. einfach derart ausgebildet werden kö nnen, ragen zumindest teilweise durch die wenigstens eine Durchbrechung 32 im hinteren Lagerschild 20. Die Kontakte der Leistungsbauteile 30 sind durch die Leiterplatte 28 hindurchgeführt und an ihrer der Zwischenwand 20 abgewandten Seite verlö tet, sodass sie durch den vom Lüfter 26 erzeugten Kühlluftstrom nicht verschmutzt werden kö nnen.

Da die Leistungsbauteile 30 zumindest teilweise durch das Lagerschild 20 und damit in den Raum des Elektromotors 10, 12 ragen, in dem auch der Lüfter 26 angebracht ist, bläst ein Teil des vom Lüfter 26 erzeugten Kühlluftstroms diese Leistungsbauteile 30 direkt an. Es ist dabei zu beachten, dass durch den Kühlluftstrom nur die Gehäuse der Leistungsbauteile 30 angeblasen werden, deren elektrische Anschlüsse aber geschützt auf der anderen Seite der Leiterplatte 28 angeordnet sind. Ferner kö nnen die Leistungsbauteile 30 auch indirekt über die Zwischenwand 20 gekühlt werden, die ihrerseits durch den vom Lüfter 26 erzeugten Kühlluftstrom gekühlt wird. Aufgrund dieser Kühlung durch den Lüfter 26 kö nnen die Leistungsbauteile 30 kleiner und preiswerter ausgebildet werden als bei herkö mmlichen Waschmaschinenantrieben.

Bei einem Waschgang der Waschmaschine muss die Antriebsvorrichtung nur eine geringe Leistung abgeben, sodass sich auch die Leistungsbauteile 30 der Elektronik nur wenig erwärmen. Der aufgrund der geringen Drehzahl der Antriebswelle 14 auch nur schwache Kühlluftstrom des Lüfters 26 muss daher die Leistungsbauteile 30 auch nicht besonders kühlen. Während eines kurzen Schleudergangs hingegen, bei dem die vom Elektromotor 10, 12 abgegebene Leistung ein Vielfaches der Leistungsabgabe im Waschgang beträgt, erwärmen sich auch die Leistungsbauteile 30 der Elektronik stark. In diesem Fall ist jedoch auch die Drehzahl des Lüfters 26 entsprechend hoch, sodass der starke Kühlluftstrom eine ausreichende Kühlung der Leistungsbauteile 30 bewirkt.

Der oben beschriebene Waschmaschinenantrieb stellt damit eine einfache, kompakte und kostengünstige Lö sung zur Integration von Elektromotor und Elektronik dar, der gleichzeitig einen ausreichenden Schutz und eine ausreichende Kühlung der Elektronik gewährleistet.

Um die Elektronik (einschließlich der Leistungsbauteile 30) besser gegen Verschmutzungen zu schützen, kö nnen verschiedene Zusatzmaßnahmen getroffen werden. Zum Beispiel kann die Elektronik 28, 30 ganz oder teilweise lackiert werden und/oder ganz oder teilweise vergossen werden. Die Elektronik 28, 30 kann auch ganz oder teilweise mit Kunststoffteilen abgedeckt werden.

Während in dem obigen Ausführungsbeispiel die Leiterplatte 28 der Elektronik hinter dem Lagerschild 20 angeordnet ist und von einer (nicht dargestellten) Motorabdeckung umschlossen ist, ist es auch denkbar, das hintere Lagerschild 20 so zu modifizieren, dass die Elektronik 28, 30 innerhalb des Lagerschildes 20 aufgenommen werden kann.

### BEZUGSZIFFERNLISTE

- 10: Stator des Elektromotors
- 12: Rotor des Elektromotors
- 14: Antriebswelle
- 16: Riemenrad
- 18: vorderes Lagerschild
- 20: hinteres Lagerschild
- 22: vorderes Lager
- 24: hinteres Lager
- 26: Lüfter
- 28: Leiterplatte
- 30: Leistungsbauteile
- 32: Durchbrechung in 20

## Patentansprüche

1. Antriebsvorrichtung für eine Waschmaschine, mit
einem Elektromotor (10, 12);
einer Antriebswelle (14), die zum Drehantrieb mit dem Elektromotor (10, 12) verbunden ist und die vom Elektromotor (10, 12) erzeugte Drehkraft auf eine Trommel der Waschmaschine überträgt;
einem Lüfter (26) zum Kühlen des Elektromotors (10, 12); und
einer Elektronik (28, 30) zum Steuern des Betriebs des Elektromotors (10, 12),
**dadurch gekennzeichnet,**
**dass** der Elektromotor (10, 12) und die Elektronik. (28, 30) in einer gemeinsamen Einheit integriert sind;
**dass** die gemeinsame Einheit eine Zwischenwand (20) aufweist, wobei der Elektromotor (10, 12) und der Lüfter (26) auf der einen Seite der Zwischenwand (20) und eine Leiterplatte (28) der Elektronik (28, 30) auf der anderen Seite der Zwischenwand (20) angeordnet sind;
**dass** die Zwischenwand (20) wenigstens eine Durchbrechung (32) aufweist; und
**dass** die Elektronik (28, 30) Leistungsbauteile (30) umfasst, die wenigstens teilweise durch die wenigstens eine Durchbrechung (32) ragen und mit der Zwischenwand (20) und/oder mit einem vom Lüfter (26) erzeugten Kühlluftstrom in Kontakt stehen.

2. Antriebsvorrichtung für eine Waschmaschine nach Anspruch 1,
**dadurch gekennzeichnet,**
**dass** die Leiterbahnen der Leiterplatte (28) auf der der Zwischenwand (20) abgewandten Seite der Leiterplatte (28) angeordnet sind.

3. Antriebsvorrichtung für eine Waschmaschine nach Anspruch 1 oder 2,
**dadurch gekennzeichnet,**
**dass** die Zwischenwand (20) ein Lagerschild zum drehbaren Lagern der Antriebswelle (14) bzw. des Rotors (12) des Elektromotors (10, 12) ist.

4. Antriebsvorrichtung für eine Waschmaschine nach einem der vorherigen Ansprüche,
**dadurch gekennzeichnet,**
**dass** der Elektromotor (10, 12) und die Elektronik (28, 30) in einem gemeinsamen Motorgehäuse integriert sind.

5. Antriebsvorrichtung für eine Waschmaschine nach einem der vorherigen Ansprüche,
**dadurch gekennzeichnet,**
**dass** die durch die Zwischenwand (20) ragenden Leistungsbauteile (32) ausgewählt sind aus einer Gruppe bestehend aus Zwischenkreiskondensator, Oberwellendrossel, Funkentstö rdrossel, Netzgleichrichter und Einschaltstrombegrenzer.

6. Antriebsvorrichtung für eine Waschmaschine nach einem der vorherigen Ansprüche,
**dadurch gekennzeichnet,**
**dass** die Elektronik (28, 30) zum Schutz gegen Staub und/oder Feuchtigkeit ganz oder teilweise lackiert ist.

7. Antriebsvorrichtung für eine Waschmaschine nach einem der vorherigen Ansprüche,
**dadurch gekennzeichnet,**
**dass** die Elektronik (28, 30) ganz oder teilweise vergossen ist.

8. Antriebsvorrichtung für eine Waschmaschine nach einem der vorherigen Ansprüche,
**dadurch gekennzeichnet,**
**dass** die Elektronik (28, 30) ganz oder teilweise mit Kunststoffabdeckungen versehen ist.

9. Antriebsvorrichtung für eine Waschmaschine nach einem der vorherigen Ansprüche,
**dadurch gekennzeichnet,**
**dass** die Zwischenwand (20) im Wesentlichen rechteckig ausgebildet ist.

## Claims

1. Drive apparatus for a washing machine, comprising an electric motor (10, 12);
a drive shaft (14) which is connected to the electric motor (10, 12) for rotary drive purposes and transmits the rotary force which is generated by the electric motor (10, 12) to a drum of the washing machine;
a fan (26) for cooling the electric motor (10, 12); and electronics (28, 30) for controlling the operation of the electric motor (10, 12),
**characterized in that** the electric motor (10, 12) and the electronics (28, 30) are integrated in a common unit;
**in that** the common unit has a partition wall (20), with the electric motor (10, 12) and the fan (26) being arranged on one side of the partition wall (20) and a printed circuit board (28) of the electronics (28, 30) being arranged on the other side of the partition wall (20) ;
**in that** the partition wall (20) has at least one aperture (32); and
**in that** the electronics (28, 30) comprise power components (30) which protrude at least partially through the at least one aperture (32) and are in contact with the partition wall (20) and/or with a cooling air stream which is generated by the fan (26).

2. Drive apparatus for a washing machine according to Claim 1,
**characterized**
**in that** the conductor tracks of the printed circuit board (28) are arranged on that side of the printed circuit board (28) which is averted from the partition wall (20).

3. Drive apparatus for a washing machine according to Claim 1 or 2,
**characterized**
**in that** the partition wall (20) is an end plate for rotatably mounting the drive shaft (14) and the rotor (12) of the electric motor (10, 12).

4. Drive apparatus for a washing machine according to one of the preceding claims,
**characterized**
**in that** the electric motor (10, 12) and the electronics (28, 30) are integrated in a common motor housing.

5. Drive apparatus for a washing machine according to one of the preceding claims,
**characterized**
**in that** the power components (32) which protrude through the partition wall (20) are selected from amongst a group comprising intermediate circuit capacitors, choking coils for upper harmonics, radio interference suppression coils, mains rectifiers and switch-on current limiters.

6. Drive apparatus for a washing machine according to one of the preceding claims,
**characterized**
**in that** the electronics (28, 30) are entirely or partially coated in order to protect against dust and/or moisture.

7. Drive apparatus for a washing machine according to one of the preceding claims,
**characterized**
**in that** the electronics (28, 30) are entirely or partially encapsulated.

8. Drive apparatus for a washing machine according to one of the preceding claims,
**characterized**
**in that** the electronics (28, 30) are entirely or partially provided with plastic covers.

9. Drive apparatus for a washing machine according to one of the preceding claims,
**characterized**
**in that** the partition wall (20) is of substantially rectangular design.

## Revendications

1. Dispositif d'entraînement pour un lave-linge, avec :
un moteur électrique (10, 12) ;
un arbre d'entraînement (14) relié, pour l'entraînement, au moteur électrique (10, 12) et
transmettant la force de rotation produite par le moteur électrique (10, 12) à un tambour du lave-linge ;
un ventilateur (26) servant au refroidissement du moteur électrique (10, 12) ; et
un système électronique (28, 30) servant à commander le fonctionnement du moteur électrique (10, 12) ;
**caractérisé en ce que** :
le moteur électrique (10, 12) et le système électronique (28, 30) sont intégrés dans une unité commune ;
l'unité commune comporte une paroi intermédiaire (20), le moteur électrique (10, 12) et le ventilateur (26) étant disposés sur un côté de la paroi intermédiaire (20) et une plaque conductrice (28) du système électronique (28, 30) étant disposée sur l'autre côté de la paroi intermédiaire (20) ;
la paroi intermédiaire (20) comportant au moins une percée (32) ; et
le système électronique (28, 30) comprenant des composants de puissance (30) ressortant au moins en partie à travers l'au moins une percée (32) et étant en contact avec la paroi intermédiaire (20) et/ou avec un flux d'air de refroidissement produit par le ventilateur (26).

2. Dispositif d'entraînement pour un lave-linge selon la revendication 1, **caractérisé en ce que** les pistes conductrices de la plaque conductrice (28) sont disposées sur le côté de la plaque conductrice (28) opposé à la paroi intermédiaire (20).

3. Dispositif d'entraînement pour un lave-linge selon la revendication 1 ou 2, **caractérisé en ce que** la paroi intermédiaire (20) est un flasque pour positionner de façon pivotante l'arbre d'entraînement (14) et/ou le rotor (12) du moteur électrique (10, 12).

4. Dispositif d'entraînement pour un lave-linge selon l'une quelconque des revendications précédentes, **caractérisé en ce que** le moteur électrique (10, 12) et le système électronique (28, 30) sont intégrés dans un carter de moteur commun.

5. Dispositif d'entraînement pour un lave-linge selon l'une quelconque des revendications précédentes, **caractérisé en ce que** les composants de puissance (32) ressortant de la paroi intermédiaire (20) sont sélectionnés dans un groupe composé d'un condensateur de circuit intermédiaire, d'un papillon d'arbre supérieur, d'un papillon d'antiparasitage, d'un redresseur de réseau et d'un limiteur de flux de connexion.

6. Dispositif d'entraînement pour un lave-linge selon l'une quelconque des revendications précédentes, **caractérisé en ce que** le système électronique (28, 30) est peint entièrement ou en partie pour offrir une protection contre la poussière et/ou l'humidité.

7. Dispositif d'entraînement pour un lave-linge selon l'une quelconque des revendications précédentes, **caractérisé en ce que** le système électronique (28, 30) est entièrement ou partiellement coulé.

8. Dispositif d'entraînement pour un lave-linge selon l'une quelconque des revendications précédentes, **caractérisé en ce que** le système électronique (28, 30) est pourvu entièrement ou en partie de caches en matière plastique.

9. Dispositif d'entraînement pour un lave-linge selon l'une quelconque des revendications précédentes, **caractérisé en ce que** la paroi intermédiaire (20) prend pour l'essentiel une forme rectangulaire.
